# DEMANDE DE BREVET EUROPEEN

(11) **EP 1 645 217 A1**
(43) Date de publication de la demande: **12.04.2006**
(21) Numéro de dépôt: 05356107.2
(22) Date de dépôt: 15.06.2005
(51) Int. Cl.: A47J 37/12

(54) **Dispositif de filtrage en continu d'huile de friteuse**

(30) Priorité: 07.10.2004 FR 0410594
(71) Demandeur: Morice Equipement, 01700 Miribel (FR)
(72) Inventeur: Aldeguer, René, F-01140 Mogneneins (FR)
(74) Mandataire: Bratel, Gérard

(57) **Abrégé**

Pour une friteuse comprenant une cuve (1) recevant un bain d'huile (3) chauffé, il est prévu un dispositif intégré (6) de filtrage de l'huile, incluant des moyens de collecte (7, 8) de l'huile contenue dans la cuve (1), et des moyens de pompage (10, 11), de filtrage (12, 13) et de recyclage (9) de cette huile vers la cuve (1). Le dispositif de filtrage (6) comprend, d'une part, un bloc de filtrage (12) situé en partie supérieure de la cuve (1) de la friteuse, en une position immédiatement accessible, à l'extrémité aval des moyens de recyclage (9), et d'autre part, disposés à l'intérieur du coffre de la friteuse, un moteur (10) et une pompe notamment rotative (11) entraînée par le moteur (10). L'invention s'applique aux friteuses industrielles ou professionnelles.

## Description

La présente invention concerne, de façon générale, les appareils de cuisson avec bain d'huile chauffé, du genre friteuse, et elle a plus particulièrement pour objet un dispositif de filtrage continu de l'huile utilisée pour la cuisson, c'est-à-dire un dispositif de filtrage à fonctionnement permanent et simultané au fonctionnement de la friteuse. L'invention se rapporte aussi à un bloc de filtrage, spécialement destiné à ce dispositif de filtrage continu d'huile de friteuse.

Cette invention s'applique notamment aux friteuses industrielles ou professionnelles, telles que celles utilisées dans les cuisines des restaurants et des collectivités.

Les systèmes habituellement utilisés, pour filtrer l'huile de telles friteuses industrielles ou professionnelles, sont généralement complexes et coûteux.

Le plus souvent, il s'agit de systèmes extérieurs à la friteuse, et réalisés sous la forme d'un chariot de filtrage indépendant, avec un filtre qui doit être raccordé périodiquement à l'évacuation d'huile de la friteuse, cette dernière étant à l'arrêt. L'huile extraite de la friteuse est alors filtrée dans le chariot, puis renvoyée par recyclage dans la cuve contenant le bain d'huile de la friteuse. Cette opération de filtrage de l'huile est habituellement effectuée une à deux fois par semaine, selon l'utilisation de la friteuse. Chaque opération de filtrage se fait à chaud, l'huile étant encore à une température d'environ 150°C, à l'issue d'un certain temps d'attente après la mise à l'arrêt de la friteuse. A titre d'exemple d'un tel système de filtrage de l'huile, réalisé sous la forme d'un chariot, il est fait référence au brevet US 4 945 893 (y compris l'état de la technique exposé dans l'introduction de ce brevet).

Plus rarement, les friteuses comportent un système de filtrage et de recyclage d'huile intégré, avec filtre et pompe. L'utilisation d'un tel système oblige généralement à une mise en arrêt de la friteuse, si bien que cette utilisation est nécessairement intermittente ou périodique, par exemple après chaque service de cuisine. A titre d'exemples de tels systèmes de filtrage intervenant de façon périodique, il est référence aux brevets US 4 195 667 et US 4 328 097.

Dans les deux cas précédents, pour effectuer les opérations de filtrage de l'huile dans un temps relativement acceptable, c'est-à-dire en quelques minutes, pour un volume d'huile à filtrer de l'ordre de 20 à 25 litres, il est nécessaire de mettre en oeuvre des pompes puissantes, donc volumineuses et coûteuses.

De plus, le caractère périodique du filtrage de l'huile entraîne une dégradation de la qualité de cette huile, dès qu'elle vient d'être filtrée et jusqu'à la prochaine opération de filtrage.

Enfin, il a été déjà proposé des friteuses pourvues d'un dispositif de filtrage continu de l'huile, rendant inutile la mise à l'arrêt de la friteuse pour réaliser le filtrage de l'huile. Le dispositif de filtrage continu de l'huile comprend dans ce cas des moyens de collecte de l'huile contenue dans la cuve de la friteuse, et des moyens de pompage, de filtrage, et de recyclage de cette huile vers la cuve, ce dispositif de filtration et en particulier ses moyens de pompage de l'huile étant prévus pour être actionnés de façon permanente, durant le temps d'utilisation de la friteuse. De tels dispositifs de filtrage continu de l'huile sont décrits dans le brevet US 3 685 433, et dans la demande de brevet britannique GB 2 307 650 A.

Les réalisations pratiques de dispositifs de filtrage, qui correspondent à ces derniers documents, comprennent un ou deux bacs de filtrage disposés au-dessous de la cuve de la friteuse, et une pompe qui peut être immergée dans un bac de filtrage, ou disposée sur le circuit d'huile par exemple en aval d'un bac de filtrage. Ces réalisations restent relativement complexes et volumineuses donc encombrantes, si bien que l'intégration d'un dispositif de filtrage continu de l'huile dans le coffre d'une friteuse pose encore des difficultés. De plus, l'utilisation de bacs de filtrage rend assez difficiles les opérations de nettoyage et de remplacement des éléments filtrants.

On connaît encore, par exemple par le brevet US 4068571, des dispositifs de filtrage continu de l'huile pour friteuse, qui sont réalisés de manière moins encombrante que les dispositifs précédents, notamment avec un moteur électrique, une pompe rotative et un élément filtrant disposés en ligne, selon une disposition compacte permettant l'intégration du dispositif de filtrage complet dans le coffre d'une friteuse.

Toutefois, dans ces dernières réalisations, les éléments filtrants sont logés dans des carters, si bien que ces éléments filtrants sont relativement difficiles à nettoyer ou à remplacer. En particulier, le nettoyage ou le remplacement des éléments filtrants nécessite le démontage ou le dévissage de pièces ou de carters, opérations qui sont particulièrement salissantes notamment lors du changement d'un filtre. A cet égard, il faut aussi considérer le fait que le filtre, placé à l'intérieur du coffre de la friteuse, est d'un accès malaisé.

La présente invention vise à éviter ces difficultés, et elle a donc pour but de fournir un dispositif de filtrage continu de l'huile pour friteuse qui soit de structure particulièrement simple et compacte, permettant son intégration aisée dans le coffre de toute friteuse industrielle ou professionnelle, tout en facilitant les opérations de nettoyage et de changement de filtre en donnant un accès direct à ce filtre.

A cet effet, l'invention a pour objet un dispositif de filtrage en continu d'huile de friteuse, en particulier de friteuse industrielle ou professionnelle, la friteuse comportant une cuve recevant un bain d'huile et des moyens de chauffage du bain d'huile, et le dispositif de filtrage de l'huile étant un dispositif intégré incluant des moyens de collecte de l'huile contenue dans la cuve, et des moyens de pompage, de filtrage et de recyclage de cette huile vers la cuve, ce dispositif de filtrage étant caractérisé essentiellement par le fait qu'il comprend, d'une part, un bloc de filtrage situé en partie supérieure de la cuve de la friteuse, en une position immédiatement accessible, à l'extrémité aval des moyens de recyclage, et d'autre part, disposés à l'intérieur du coffre de la friteuse, un moteur et une pompe notamment rotative entraînée par le moteur. Le bloc de filtrage a ainsi pour caractéristique d'être dissocié du moteur et de la pompe du dispositif de filtrage, et de se trouver très aisément accessible, même en cours de fonctionnement de la friteuse.

Selon un mode de réalisation avantageux, le bloc de filtrage comporte un élément filtrant amovible prévu pour filtrer l'huile par gravité au débouché d'un conduit de retour de l'huile vers la cuve de la friteuse, le conduit de retour étant relié à une sortie d'huile du corps de la pompe.

Ainsi, l'élément filtrant est très facile à changer, sans nécessiter de démontage du dispositif, ni de vidange, ni de fermeture de vanne.

L'élément filtrant est par exemple un filtre en tissu micro-poreux, de qualité alimentaire, mis en place sur un support ajouré. Il est possible d'employer un filtre de grandes dimensions qui se sature donc moins rapidement.

Le bloc de filtrage peut aussi comporter un organe cache-filtre amovible, avantageusement muni d'une poignée de préhension.

Ce bloc de filtrage peut être maintenu en place, dans la zone supérieure de la cuve de friteuse, par des moyens quelconques, comme par exemple deux goujons de soutien placés l'un en regard de l'autre à l'intérieur de la cuve de la friteuse, ou une tige horizontale métallique, notamment en acier inoxydable, retenue à ses deux extrémités par deux équerres respectives.

Il est en outre envisageable qu'un élément de préfiltrage soit monté en partie inférieure de la cuve de la friteuse, à l'embouchure d'un conduit d'amenée de l'huile de la cuve vers une entrée d'huile du corps de la pompe. Ainsi, l'huile subit un préfiltrage avant de se diriger vers la pompe, ce qui permet d'éviter le passage, en amont de la pompe, de gros résidus tels que frites entières, dont le blocage ou l'accumulation pourrait freiner le flux d'huile. Cet élément de préfiltrage est réalisable sous la forme d'une simple rondeiie, pourvue d'ouvertures de dimensions appropriées.

Une vanne de barrage est avantageusement placée sur le conduit d'amenée, et prévue pour commander l'arrivée de l'huile dans la pompe ; la vanne de barrage est fermée avant toute opération de vidange du pot de décantation en vue d'éliminer les déchets recueillis.

Un pot de décantation d'huile peut être fixé de manière amovible à la pompe, et de préférence pourvu d'une vanne de vidange permettant ainsi d'éliminer les résidus accumulés dans le pot de décantation, et par ce moyen de réduire la fréquence de nettoyage de l'élément filtrant.

Enfin, il est avantageusement prévu que le moteur entraînant la pompe notamment rotative du dispositif de filtrage soit un moteur mis en marche automatiquement, dès la mise en service des moyens de chauffage du bain d'huile, et que ce moteur soit remis à l'arrêt automatiquement en même temps que la friteuse.

Dans l'ensemble, l'invention propose ainsi un dispositif de filtrage en continu d'huile de friteuse, c'est-à-dire un dispositif qui fonctionne pendant tout le temps de service de la friteuse, l'huile étant filtrée en circuit fermé, à l'intérieur de la friteuse. Ce dispositif de filtrage continu, et la friteuse qui en est équipée, présentent les avantages suivants :
L'huile du bain de la friteuse est filtrée en permanence, dès la mise en service de la friteuse, ce qui la nettoie et la régénère à tout moment (avec reprise d'oxygène) et augmente sa durée de vie, contrairement aux systèmes classiques avec lesquels l'huile se dégrade entre deux opérations successives de filtrage, ce qui a pour conséquences avantageuses :
   - de meilleures conditions d'hygiène,
   - un goût amélioré des aliments frits,
   - une économie d'huile, la durée d'utilisation des bains d'huile étant allongée.

Toujours en raison de son fonctionnement continu, le dispositif de filtrage de l'huile selon l'invention peut se contenter d'une pompe à faible débit pour la mise en circulation de l'huile dans le circuit de filtrage. On peut ainsi mettre en oeuvre une pompe miniaturisée et de faible coût.

De plus, la conception d'ensemble du dispositif de filtrage selon l'invention supprime tout bac de filtrage volumineux.

Ainsi, ce dispositif de filtrage continu est de structure simple, économique et très discrète et compacte, en comparaison avec les systèmes actuels qui sont encombrants et coûteux.

Le dispositif de filtrage continu proposé peut équiper toute friteuse d'un modèle existant ou futur, ou être adapté sans difficulté dans une friteuse préexistante.

De plus, l'asservissement du fonctionnement de ce dispositif de filtrage continu à celui de la friteuse assure son fonctionnement certain et permanent, aucune manipulation n'étant exigée pour sa mise en service.

Enfin, les seules manipulations encore nécessaires périodiquement, pour le nettoyage du bloc de filtrage et le remplacement de l'élément filtrant, restent simples, rapides, sécurisées et peu salissantes en comparaison avec les dispositifs antérieurement connus, ceci en raison de la position et de la structure du bloc de filtrage.

L'utilisation reste donc, globalement, très pratique.

L'invention a aussi pour objet, en tant que tel, un bloc de filtrage destiné à un dispositif de filtrage continu d'huile de friteuse, tel que défini ci-dessus, ce bloc de filtrage comrpenant un élément filtrant prévu pour filtrer l'huile par gravité, placé dans une partie support pourvue de moyens de retenue, notamment par accrochage, pour son positionnement en partie supérieure de la cuve d'une friteuse.

Il est ainsi constitué un bloc de filtrage constructivement indépendant des autres composants du dispositif de filtrage de l'huile, et directement accessible, ce bloc de filtrage pouvant être extrait et remis en place de façon instantanée, avec un élément filtrant de qualité alimentaire qui est lavable et réutilisable, et qui est aussi remplaçable en quelques secondes. Bien entendu, lorsqu'il est en place dans la zone supérieure de la cuve, ce bloc de filtrage coopère fonctionnellement avec les autres composants du dispositif de filtrage, en recueillant et en filtrant l'huile renvoyée en partie haute de la fiteuse, au travers de conduit de recyclage par la pompe animée elle-même par le moteur.

L'invention sera mieux comprise à l'aide de la description qui suit, en référence au dessin schématiquement annexé représentant, à titre d'exemple, une forme d'exécution de ce dispositif de filtrage continu de l'huile pour friteuse, ainsi que des modes de réalisation de son bloc de filtrage :
Figure 1 est un schéma de principe d'un dispositif de filtrage continu de l'huile conforme à la présente invention, et équipant une friteuse ;
Figure 2 est une vue en perspective éclatée du bloc de filtrage d'huile de ce dispositif ;
Figure 3 est une vue générale en perspective des moyens de pompage d'huile de ce dispositif ;
Figure 4 est une vue détaillée, en coupe longitudinale, des moyens de pompage d'huile de ce dispositif ;
Figure 5 est une vue en perspective éclatée montrant un premier mode de réalisation des moyens assurant le maintien en place du bloc de filtrage ;
Figure 6 est une vue en coupe transversale montrant le bloc de filtrage maintenu en place par les moyens de la figure 5 ;
Figure 7 est une vue en perspective éclatée montrant un second mode de réalisation des moyens assurant le maintien en place du bloc de filtrage ;
Figure 8 est une vue en perspective éclatée de l'élément de préfiltrage.

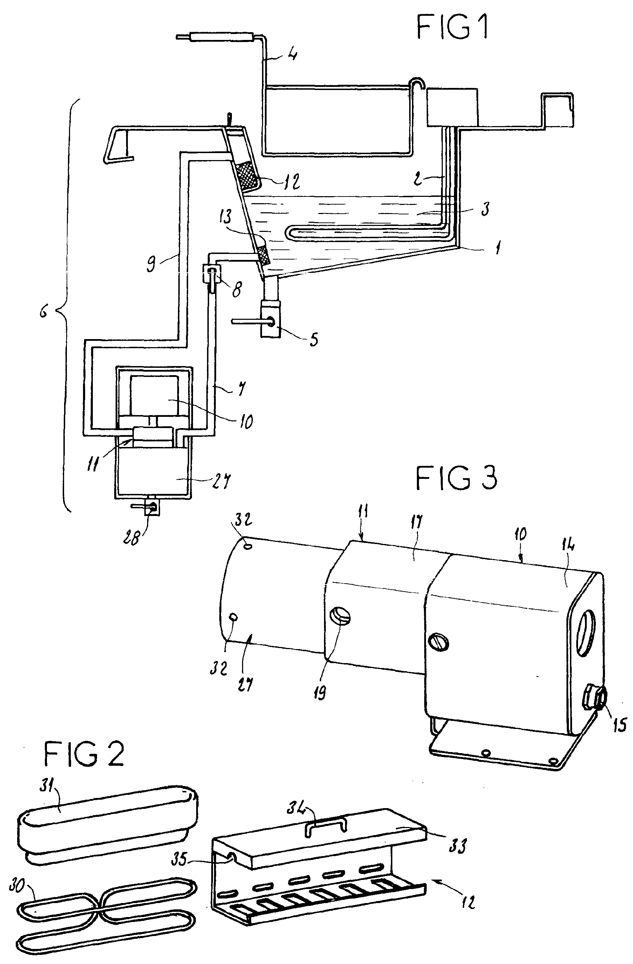

Comme le rappelle la figure 1, une friteuse industrielle ou professionnelle comprend de manière généralement connue une cuve 1 ouverte à sa partie supérieure et prévue pour contenir un bain d'huile 3, ainsi qu'un panier amovible 4 recevant les aliments à frire. Des moyens de chauffage 2, en particulier électriques, sont prévus pour le chauffage et le maintien en température du bain d'huile 3. Un dispositif de vidange 5, avec vanne, est prévu au point le plus bas de la cuve 1 de la friteuse.

Cette friteuse est équipée d'un dispositif de filtrage continu de l'huile, désigné globalement par la référence 6. Ce dispositif de filtrage 6 comprend notamment un groupe moto-pompe disposé horizontalement à l'intérieur du coffre de la friteuse, avec une pompe rotative 11 entraînée par un moteur électrique 10, et un bloc de filtrage 12 situé en partie supérieure de la cuve 1 de la friteuse.

Un conduit d'amenée 7 amène l'huile de la cuve 1 au dispositif de filtrage 6. Son embouchure est située dans le tiers inférieur de la cuve 1 de la friteuse et comporte un élément de préfiltrage 13 lavable sans démontage, par un simple brossage (voir description plus détaillée ci-après).

Une vanne de barrage 8, prévue pour commander l'arrivée de l'huile vers le dispositif de filtrage 6, est placée sur le conduit d'amenée 7 en amont de l'entrée du groupe moto-pompe 10-11.

Un conduit de retour 9 a son point de départ à la sortie du groupe moto-pompe 10-11, et revient vers la cuve 1, en débouchant dans la zone supérieure de celle-ci, c'est-à-dire au-dessus du niveau d'huile maximal de cette cuve 1, au-dessus du bloc de filtrage 12.

Comme illustré en figure 2, le bloc de filtrage 12 comporte un élément filtrant 31 prévu pour capter l'huile à son retour vers la cuve 1 et la filtrer par gravité. L'élément filtrant est un filtre technique 31 en tissu micro-poreux, de qualité alimentaire, mis en place sur un support ajouré 30 en fil d'acier inoxydable, l'ensemble étant protégé par un organe amovible cache-filtre 33 en acier inoxydable muni d'une poignée de préhension 34. Le filtre 31 permet un filtrage serré des huiles de friture (30 à 50 microns). Il est lavable et réutilisable.

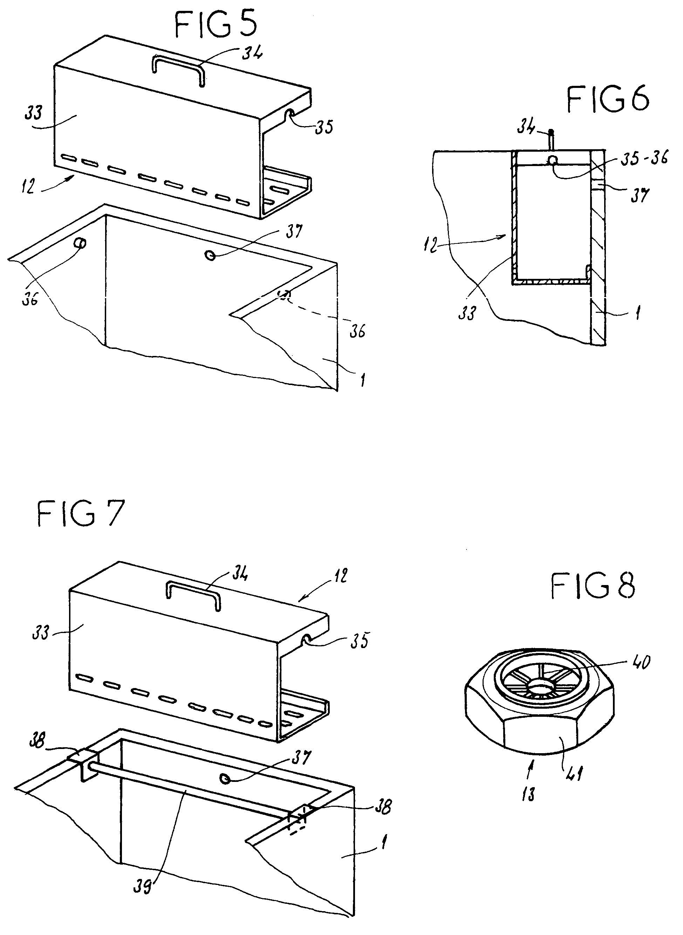

Le bloc de filtrage 12 est monté dans un espace dédié et immédiatement accessible, en partie haute, au-dessus du niveau d'huile maximal de la cuve 1. Le filtre 31 est positionné en dessous du débouché du conduit de retour 9 dans la cuve 1 de sorte que l'huile est filtrée par gravité, en traversant verticalement le filtre 31, avant de retomber dans la cuve 1. Les moyens permettant le maintien en place de ce bloc de filtrage 12 peuvent prendre diverses formes, et des exemples en seront donnés ci-après avec référence aux figures 5 à 7.

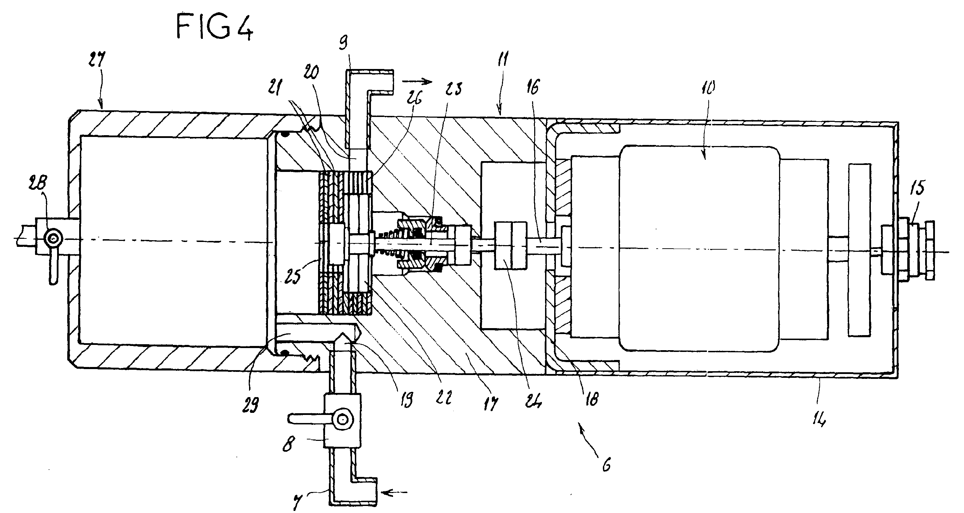

Le groupe moto-pompe du dispositif de filtrage 6, à savoir le moteur 10, la pompe 11 et un pot de décantation 27, est représenté plus en détail aux figures 3 et 4.

Le moteur 10 est un moteur électrique, monté sous un capot 14 muni d'une traversée étanche 15 pour le passage des câbles d'alimentation électrique. Le moteur 10 comporte un arbre horizontal 16, dirigé vers l'avant.

La pompe 11 est une pompe de type centrifuge, dont le corps 17 est placé à l'avant du moteur 10, avec interposition d'une platine 18 de liaison entre le moteur 10 et la pompe 11. Le corps 17 de la pompe 11 possède une entrée d'huile latérale 19, et une sortie d'huile latérale 20. L'entrée d'huile 19 est raccordée à l'extrémité du conduit d'amenée 7, en aval de la vanne 8. La sortie d'huile 20 est raccordée au départ du conduit de retour d'huile 9, qui peut prendre la forme d'un raccord coudé.

La pompe 11 possède dans son corps 17 une cavité, par exemple délimitée par un empilage de plaques découpées 21 dont certaines sont évidées en leur centre. Dans la cavité de pompe ainsi formée est montée tournante une turbine 22, portée par un axe 23 monté tournant dans des roulements. Un accouplement 24 assure la liaison d'entraînement entre l'arbre 16 du moteur électrique 10 et l'axe 23 de la turbine 22.

Les plaques 21 terminales de délimitation de la cavité de la pompe 11 possèdent au moins une ouverture centrale d'aspiration 25. Les autres plaques 21, situées autour de la turbine 22, possèdent des interruptions 26 de direction tangentielle, formant une ouverture de refoulement qui se prolonge par la sortie d'huile latérale 20 du corps de pompe 17.

Un pot de décantation 27 est vissé de façon étanche sous le corps de pompe 17, et délimite une chambre qui s'étend depuis le fond fermé de ce pot de décantation 27 jusqu'à l'ouverture d'aspiration 25 de la pompe 11. L'entrée d'huile latérale 19 du corps de pompe 17 est prolongée par un canal interne 29 qui débouche dans la chambre du pot de décantation 27.

Afin de limiter les opérations de nettoyage du filtre 31, une vanne de vidange 28 est montée sous le pot de décantation 27. Elle permet d'éliminer les résidus accumulés dans le pot de décantation 27 et aussi d'éviter la solidification d'huile dans les conduits 7 et 9.

Les figures 5 et 6 illustrent, dans le détail, un premier mode de réalisation des moyens assurant le maintien en place du bloc de filtrage 12, pour lequel n'est ici représenté que le cache-filtre 33. Ce dernier est pourvu, dans sa partie supérieure et à des deux extrémités, de deux encoches 35 tournées vers le bas. La partie supérieure de la cuve 1 de la friteuse comporte, sur deux faces latérales opposées, deux goujons de soutien 36 placés l'un en regard de l'autre. Le bloc de filtrage 12 peut ainsi être accroché, par ses extrémités, sur les deux goujons 36, par engagement et accrochage de chaque encoche 35 sur l'un des goujons 36, de sorte que le bloc de filtrage 12 est maintenu horizontalement, le long de l'un des côtés de la cuve 1 dans la partie supérieure de celle-ci, en regard du débouché 37 du conduit de retour 9 de l'huile vers la cuve 1. Ce premier mode de réalisation est plus particulièrement adapté à une friteuse équipée d'origine du dispositif de filtrage 6 objet de l'invention.

La figure 7 illustre un second mode de réalisation des moyens assurant le maintien en place du bloc de filtrage 12. Ce dernier est pourvu ici encore d'encoches 35. Deux équerres 38, fixées sur le bord supérieur de la cuve 1, sur deux côtés opposés de celle-ci, retiennent les deux extrémités d'une tige métallique 39, notamment en acier inoxydable, qui s'étend ainsi horizontalement, en travers de la partie supérieure de la cuve, devant le débouché 37 du conduit de retour d'huile. Le bloc de filtrage 12 s'accroche par ses deux encoches 35 sur la tige 39. Cet autre mode de réalisation est plus particulièrement adapté à une friteuse préexistante, qui sera équipée ultérieurement du dispositif de filtrage, objet de l'invention.

Comme l'illustre le dessin (comparer les figures 1 et 6), les moyens précédemment décrits, assurant le maintien en place du bloc de filtrage 12, sont appropriés aussi bien pour une cuve 1 à parois verticales que pour une cuve 1 à parois plus ou moins inclinées.

Enfin, la figure 8 illustre un mode de réalisation de l'élément de préfiltrage 13. Celui-ci comprend une rondelle 40, montée dans un écrou 41, la rondelle 40 étant pourvue d'ouvertures découpées notamment suivant des secteurs de cercle. On notera que la section de passage totale, résultant de l'ensemble des ouvertures de la rondelle 40, n'est pas inférieure à la section du conduit d'amenée 7 au départ duquel est placé l'élément de préfiltrage 13.

Le dispositif de filtrage 6, précédemment décrit, est prévu pour fonctionner de façon permanente, pendant le service de la friteuse c'est-à-dire durant tout le temps de cuisson des aliments placés dans le panier 4. Le fonctionnement continu du dispositif de filtrage 6 s'établit comme suit, en relation avec celui de la friteuse :
L'huile chaude du bain d'huile 3, par exemple à une température de 180°C, est collectée dans la zone inférieure de la cuve 1, par le conduit 7, au travers de l'élément de préfiltrage 13, lequel permet d'éviter le passage, en amont de la pompe 11, de gros résidus tels que des frites entières, dont l'accumulation ou le blocage pourrait freiner le flux d'huile.
L'huile préfiltrée parvient ainsi à l'entrée latérale 19 du corps de pompe 17, et est dirigée, par le canal 29, dans le pot de décantation 27.
L'huile décantée est aspirée, par l'ouverture centrale d'aspiration 25, dans la cavité de la pompe 11, qui la refoule par l'ouverture tangentielle résultant des interruptions 26, puis par la sortie latérale 20.
L'huile est ramenée par le conduit 9, puis filtrée par gravité sur le filtre 31 du bloc de filtrage 12, avant de retomber dans la cuve 1 de la friteuse. L'huile est ainsi filtrée et recyclée en permanence.

La turbine 22 de la pompe 11 peut broyer les petits débris, du genre résidus carbonés, qui sont ensuite filtrés sans boucher le circuit en avai de la pompe 11 puisqu'ils sont recueillis sur le filtre 31 : le circuit des déchets ne se "boucle" donc pas.

Le fonctionnement précédemment décrit du dispositif de filtrage 6 est asservi automatiquement à celui de la friteuse : dès que la friteuse est mise en marche, c'est-à-dire dès que le bain d'huile 3 est chauffé, le moteur 10 est, lui aussi, automatiquement mis en marche, de sorte que le filtrage de l'huile commence, et ce filtrage se poursuit jusqu'à l'arrêt de la friteuse.

Il est également possible, durant un temps d'arrêt de la friteuse et après fermeture de la vanne 8, de dévisser le pot de décantation 27 de la pompe 11 pour le vider des déchets recueillis. Un outil simple, du genre clé, est avantageusement prévu pour faciliter le démontage et le remontage du pot de décantation 27, cet outil saisissant le pot de décantation 27 en coopérant avec l'un parmi plusieurs trous borgnes 32 ménagés à la base de ce pot de décantation 27 (voir figure 3).

Dans une variante non illustrée, le dévissage du pot de décantation 27 est réalisable grâce à une tête de manoeuvre à six pans, dont le pot de décantation est muni sur sa face d'extrémité.

L'on ne s'éloignerait pas du cadre de l'invention, telle que définie dans les revendications annexées, quels que soient notamment :
- les détails constructifs du dispositif de filtrage, notamment de sa pompe, celle-ci pouvant être de tout type ;
- les matériaux filtrants utilisés, et la conception du filtre et du préfiltre ;
- les moyens utilisés pour le maintien en place du bloc de filtrage dans la zone supérieure de la cuve de la friteuse ;
- la position et l'orientation du groupe moto-pompe, à l'intérieur du coffre de la friteuse.

## Revendications

1. Dispositif de filtrage en continu d'huile de friteuse, en particulier de friteuse industrielle ou professionnelle, la friteuse comportant une cuve (1) recevant un bain d'huile (3) et des moyens de chauffage (2) du bain d'huile (3), et le dispositif (6) de filtrage de l'huile étant un dispositif intégré incluant des moyens de collecte (7, 8) de l'huile contenue dans la cuve (1), et des moyens de pompage (10, 11, 27), de filtrage (12, 13) et de recyclage (9) de cette huile vers la cuve (1), **caractérisé en ce qu'**il comprend, d'une part, un bloc de filtrage (12) situé en partie supérieure de la cuve (1) de ia friteuse, en une position immédiatement acessible, à l'extrémité aval des moyens de recyclage (9), et d'autre part, disposés à l'intérieur du coffre de la friteuse, un moteur (10) et une pompe notamment rotative (11) entraînée par le moteur (10).

2. Dispositif de filtrage selon la revendication 1, **caractérisé en ce que** le bloc de filtrage (12) comporte un élément filtrant (31) amovible prévu pour filtrer l'huile par gravité au débouché (37) d'un conduit de retour (9) de l'huile vers la cuve (1) de la friteuse, le conduit de retour (9) étant relié à une sortie d'huile (20) du corps (17) de la pompe (11).

3. Dispositif de filtrage selon la revendication 2, **caractérisé en ce que** l'élément filtrant est un filtre (31) en tissu micro-poreux, de qualité alimentaire, mis en place sur un support (30) ajouré amovible.

4. Dispositif de filtrage selon la revendication 2 ou 3, **caractérisé en ce que** le bloc de filtrage (12) comporte un organe cache-filtre (33) amovible et avantageusement muni d'une poignée (34) de préhension.

5. Dispositif de filtrage selon l'une des revendications 1 à 4, **caractérisé en ce qu'**un élément de préfiltrage (13) est monté en partie inférieure de la cuve (1) de la friteuse, à l'embouchure d'un conduit d'amenée (7) de l'huile de la cuve (1) vers une entrée d'huile (19) du corps (17) de la pompe (11).

6. Dispositif de filtrage selon la revendication 5, **caractérisé en ce qu'**une vanne de barrage (8) est placée sur le conduit d'amenée (7), et prévue pour commander l'arrivée de l'huile dans la pompe (11).

7. Dispositif de filtrage selon l'une des revendications 1 à 6, **caractérisé en ce qu'**un pot de décantation d'huile (27) est fixé de manière amovible à la pompe (11), et est de préférence pourvu d'une vanne de vidange (28).

8. Dispositif de filtrage selon l'une des revendications 1 à 7, **caractérisé en ce que** le moteur (10) entraînant la pompe notamment rotative (11) est un moteur mis en marche automatiquement, dès la mise en service des moyens de chauffage du bain d'huile (3), et **en ce que** ce moteur (10) est remis à l'arrêt automatiquement en même temps que la friteuse.

9. Bloc de filtrage destiné à un dispositif de filtrage continu d'huile de friteuse selon l'une quelconque des revendications 1 à 8, **caractérisé en ce qu'**il comprend un élément filtrant (31) prévu pour filtrer l'huile par gravité, placé dans une partie support (30, 33) pourvue de moyens de retenue (35), notamment par accrochage, pour son positionnement en partie supérieure de la cuve (1) d'une friteuse.

10. Bloc de filtrage selon la revendication 9, **caractérisé en ce que** ses moyens de retenue sont constitués par deux encoches (35) tournées vers le bas, et prévues pour s'accrocher sur de goujons (36) ou sur une tige (39), placés dans la partie supérieure de la cuve (1) de la friteuse.
